# EUROPÄISCHE PATENTSCHRIFT

(11) **EP 0 951 505 B1**
(45) Veröffentlichungstag und Bekanntmachung des Hinweises auf die Patenterteilung: **24.04.2002**
(21) Anmeldenummer: 98901973.2
(22) Anmeldetag: 16.01.1998
(51) Int. Cl.: C08L 3/02, C08B 31/00, D21H 17/29

(54) **POLYMERMODIFIZIERTE STÄRKE, VERFAHREN ZU IHRER HERSTELLUNG UND IHRE VERWENDUNG**
POLYMER-MODIFIED STARCH, METHOD FOR ITS PRODUCTION, AND ITS USE
AMIDON MODIFIE AVEC UN POLYMERE, SON PROCEDE DE PRODUCTION ET SON UTILISATION

(30) Priorität: 17.01.1997 DE 19701524
(43) Veröffentlichungstag der Anmeldung: 27.10.1999
(73) Patentinhaber: BASF AKTIENGESELLSCHAFT, 67056 Ludwigshafen (DE)
(72) Erfinder: NIESSNER, Manfred, D-67105 Schifferstadt (DE); NILZ, Claudia, D-67127 Rödersheim-Gronau (DE); LORENCAK, Primoz, D-67069 Ludwigshafen (DE); RÜBENACKER, Martin, D-67122 Altrip (DE); ETTL, Roland, D-67454 Ha loch (DE)
(74) Vertreter: Kinzebach, Werner, Dr.
(86) Internationale Anmeldenummer: EP9800232
(87) Internationale Veröffentlichungsnummer: WO9831740

(56) Entgegenhaltungen:
- EP-A- 0 803 512
- DE-A- 4 438 708
- US-A- 3 854 970
- US-A- 4 146 515
- PATENT ABSTRACTS OF JAPAN vol. 096, no. 007, 31.Juli 1996 & JP 08 073502 A (DAIWA KAGAKU KOGYO KK), 19.März 1996,

## Beschreibung

Die vorliegende Erfindung betrifft Stärken in nicht-aufgeschlossener oder aufgeschlossener Form, die mit Polymeren, welche kationische und/oder kationisierbare Gruppen enthalten, modifiziert sind, ein Verfahren zu deren Herstellung sowie deren Verwendung als Hilfsmittel bei der Herstellung von Papier, Pappe und Karton, insbesondere als Trockenverfestigungsmittel für Papier.

In Ullmanns Encyklopädie der Technischen Chemie, 4. Aufl., Verlag Chemie, Weinheim, 1979, Bd. 17, S. 581 ff. wird allgemein die Verwendung von aufgeschlossenen, wasserlöslichen Stärken und von wasserlöslichen Stärkederivaten als Hilfsstoffe für die Papierherstellung, insbesondere zur Erhöhung der Festigkeit des Papiers beschrieben. Dabei ist jedoch die Retention der gelösten Stärken im Papier gering, was zu einer starken Belastung der Abwässer führt.

Die US-A-3,734,820 beschreibt die Verwendung kationischer Dextran-Pfropfcopolymere als Additive zur Verbesserung der Trockenfestigkeit von Papier. Dabei werden die Pfropfcopolymere zu einer wässrigen Cellulose-Dispersion gegeben. Dieses Gemisch setzt man dann zur Herstellung von Papierbögen ein. Die Pfropfcopolymere werden durch Pfropfen von Dextran, einem in der Natur vorkommenden Polymerisat mit einem mittleren Molekulargewicht von etwa 20.000 bis etwa 50.000.000, mit kationischen Monomeren, z.B. diallylischen, quaternären Ammoniumverbindungen, wie Diallyldimethylammoniumchlorid, oder acrylischen, quaternären Ammoniumverbindungen, wie Dimethylaminoethylmethacrylat und deren Mischungen mit Acrylamid oder Methacrylamid hergestellt. Dabei wird die Pfropfcopolymerisation vorzugsweise in Gegenwart eines Redoxkatalysators, z.B. auf Cer-Basis durchgeführt.

Die US-A-3,467,608 beschreibt ein Verfahren zur Herstellung einer kationischen Stärke durch Erhitzen einer wässrigen Stärkeaufschlämmung unter Zusatz eines Polyalkylenimins, wie z.B. Polyethylenimin, oder eines Polyalkylenpolyamins, wie z.B. Polyethylenpolyamin, wobei das Molekulargewicht des zur Modifizierung verwendeten Polymers mindestens 50.000 beträgt. Bezogen auf den Feststoffgehalt enthält das Reaktionsgemisch 0,5 bis 40 Gew.-% des Polymerisats und 60 bis 99,5 Gew.-% Stärke. Die resultierenden kationischen Stärkederivate werden als Flockungsmittel verwendet.

Die US-A-4,097,427 beschreibt ein Verfahren zur Kationisierung von Stärke, wobei eine wässrige Stärkeaufschlämmung unter alkalischen Reaktionsbedingungen mit einem wasserlöslichen Polymer, das quaternäre Ammoniumgruppen enthält, in Gegenwart eines Oxidationsmittels umgesetzt wird. In Frage kommen dabei quaternisierte Polyethylenimine, quaternisierte Diallyldialkylaminpolymere, etc. Als Oxidationsmittel werden z.B. Ammoniumpersulfat, Wasserstoffperoxid, Natriumhypochlorit, Ozon oder t.-Butylhydroperoxid verwendet. Der pH-Wert der Stärkeaufschlämmung wird mit wasserlöslichen Basen auf etwa 8 eingestellt. Die so hergestellten, modifizierten kationischen Stärken werden als Trockenverfestigungsmittel bei der Herstellung von Papier dem Papierstoff zugegeben. Bei diesem Verfahren wird das Abwasser jedoch durch einen sehr hohen CSB-Wert belastet.

Die US-A-4,146,515 beschreibt ein Verfahren zur Herstellung einer gallertartigen, kationischen Stärke zur Oberflächenleimung und Beschichtung von Cellulosematerialien. Dabei wird eine wässrige Aufschlämmung einer partiell oxidierten Stärke zusammen mit einem kationischen Polymer in einem kontinuierlichen Kocher aufgeschlossen. Als kationische Polymere werden dabei Kondensate aus Epichlorhydrin und Dimethylamin, Polymerisate von Diallyldimethylammoniumchlorid, quaternisierte Reaktionsprodukte von Vinylidenchlorid und Ammoniak, quaternisiertes Polyethylenimin sowie quaternisiertes Polyepichlorhydrin verwendet.

Die DE-A-37 19 480 und die EP-A-0 282 761 beschreiben ein Verfahren zur Herstellung von Papier, Pappe und Karton mit hoher Trokkenfestigkeit durch Zugabe eines Trockenverfestigungsmittels aus einer Mischung aus kationischen Polymerisaten und Stärke zum Papierstoff. Dabei enthalten die kationischen Polymerisate als charakteristische Monomere Einheiten von Diallyldimethylammoniumchlorid, N-Vinylamin oder N-Vinylimidazolin einpolymerisiert. Ebenso kann Polyethylenimin als kationisches Polymer verwendet werden. Zur Herstellung der Trockenverfestigungsmittel wird eine wässrige Aufschlämmung einer nativen Kartoffelstärke entweder in Gegenwart der Polymerisate durch Erhitzen auf Temperaturen oberhalb der Verkleisterungstemperatur in Abwesenheit von Oxidationsmitteln, Polymerisationsinitiatoren und Alkalien aufgeschlossen oder eine bereits aufgeschlossene Kartoffelstärke mit den kationischen Polymerisaten bei Temperaturen im Bereich von 15 bis 70°C zur Reaktion gebracht. Dabei wird als Stärke ausschließlich native oder thermisch abgebaute Kartoffelstärke verwendet und die Modifizierung mit den kationischen Polymerisaten erfolgt in wässriger Aufschlämmung oder in wässriger Lösung.

Einen ähnlichen Offenbarungsgehalt besitzt die EP-A-0 301 372, wobei kationisch modifizierte, enzymatisch abgebaute Stärken verwendet werden.

Die US-A-4,880,497 und die US-A-4,978,427 beschreiben wasserlösliche Copolymere, die Vinylamineinheiten enthalten und ihre Verwendung als Naßverfestiger und Trockenverfestiger für Papier. Die Polymerisate werden durch Copolymerisation von N-Vinylformamid und einem ethylenisch ungesättigten Monomer, ausgewählt unter Vinylacetat, Vinylpropionat, Alkylvinylethern, Estern, Nitrilen und Amiden der Acryl- und Methacrylsäure und N-Vinylpyrrolidon und anschliessender Hydrolyse von 30 bis 100 Mol-% der Formylgruppen des resultierenden Copolymerisats unter Bildung von Aminogruppen hergestellt. Die hydrolysierten Copolymere werden zur Papierherstellung in Mengen von 0,1 bis 5 Gew.-%, bezogen auf trockene Fasern, verwendet.

Die EP-A-0 418 343 beschreibt ebenfalls ein Verfahren zur Herstellung von Papier, Pappe und Karton durch Entwässern eines Papierstoffs in Gegenwart von N-Vinylformamid-Einheiten enthaltenden Polymerisaten. Dabei werden nicht hydrolysierte Copolymerisatte verwendet, die N-Vinylformamid und mindestens ein weiteres, kationische Gruppen enthaltendes Monomer aus der Gruppe der (Meth)acrylamid mit Ammoniumalkylenresten oder aus der Gruppe der Diallyldialkylammoniumverbindungen einpolymerisiert enthalten. Zur Erzielung einer guten Retention gegenüber Papierfasern bei der Verwendung dieser Copolymerisate als Trockenverfestigungsmittel für Papier wird dem Papierstoff eine wässrige Lösung zugesetzt, die zuvor durch Erhitzen der wässrigen Copolymerisate gemeinsam mit nativer Kartoffelstärke auf Temperaturen oberhalb der Verkleisterungstemperatur der Stärke in Abwesenheit von Oxidationsmitteln, Polymerisationsinitiatoren und Alkalien hergestellt wurde.

Die WO 96/13525 beschreibt ein Verfahren zur kationischen Modifizierung von Stärke durch Umsetzung verschiedener nativer Stärken und Wachsstärken mit Polymeren, die Amino- und/oder Ammoniumgruppen enthalten. Die Umsetzung erfolgt dabei in wässriger Lösung bei erhöhten Temperaturen und erhöhtem Druck in Abwesenheit von Oxidationsmitteln, Polymerisationsinitiatoren und Alkalien, wobei die Stärke weitgehend aufgeschlossen wird und nur ein geringfügiger Molekulargewichtsabbau von höchstens 10 Gew.-% der Stärke stattfindet. Die so erhaltenen, kationisierten Stärken werden als Trockenverfestiger bei der Papierherstellung verwendet.

Die EP-A-0 803 512 beschreibt ein Verfahre zur Herstellung einer kationischen Stärke, wobei man Stärke in Gegenwart eines kationischen Polymers röstet.

Die JP-A-0 807 35 02 beschreibt ein Verfahren zur Herstellung einer kationisch modifizierten Stärke durch Behandeln von Stärke mit einer wässrigen Lösung einer kationischen Harzzusammensetzung, wobei es sich um ein Polykondensat handelt, das durch Erhitzen eines Dicyandiamid-Formaldehyd-Gemischs in Gegenwart von Ammoniumchlorid oder -sulfat erhältlich ist.

Bei den zuvor beschriebenen Verfahren zur Herstellung von mit kationischen Polymeren modifizierter Stärke wird das Polymer zu einer wässrigen Aufschlämmung einer nativen Stärke oder zu einer Lösung einer abgebauten Stärke gegeben, wobei die Modifizierung gleichzeitig mit dem Aufschluß der Stärke erfolgen kann. In keiner der zuvor genannten Schriften findet sich ein Hinweis darauf, eine in trockener Form vorliegende Stärke mit einem kationischen Polymer zu versetzen, um ein festes, vorzugsweise pulverförmiges Zwischenprodukt zu erhalten, welches dann einem separaten Aufschluß unterzogen werden kann.

Im allgemeinen erfolgt die Modifizierung sowie der Aufschluß der Stärke nicht beim Hersteller der sondern beim Anwender, z.B. dem Papierhersteller. Dabei sind Lagerung und Transport der Komponenten sowie die Dosierung des Kationisierungsmittels für den Kunden oftmals zeit- und kostenaufwendig. Der vorliegenden Erfindung liegt daher die Aufgabe zugrunde, nicht aufgeschlossene modifizierte Stärken in geeigneter Compoundierung für den Anwender, z.B. in Pulverform zur Verfügung zu stellen. Dabei sollen diese als Handelsform geeigneten Zwischenprodukte nach dem Aufschluß beim Verbraucher aufgeschlossene, modifizierte Stärken liefern, die gute Eigenschaften bei der Verwendung als Hilfsmittel bei der Papierherstellung, insbesondere als Trockenverfestiger besitzen.

Überraschenderweise wurde nun gefunden, daß die Aufgabe gelöst wird, wenn man kationische Polymere auf eine trockene, rieselfähige Stärke aufbringt.

Gegenstand der Erfindung ist daher ein Verfahren zur Herstellung von Stärke, die mit wenigstens einem kationischen Polymer modifiziert ist, das dadurch gekennzeichnet ist, daß man trockene, rieselfähige Stärke vorlegt und darauf das kationische Polymer aufbringt, ohne die Stärkepartikel zu verkleben.

Nach dem erfindungsgemäßen Verfahren wird zur Modifizierung die Stärke in trockener, pulverförmiger, im wesentlichen wasserfreier Form verwendet. unter 'im wesentlichen wasserfrei' werden dabei auch Stärken mit einem für Naturprodukte oder für Derivate von Naturprodukten üblichen Restwassergehalt verstanden. Dabei kann eine einzige Stärkesorte oder auch eine Mischung verschiedener Stärkesorten, wie im folgenden näher beschrieben, verwendet werden.

Die kationischen Polymerisate können bei ihrer Zugabe zu den Stärken in fester, aufgeschlämmter oder gelöster Form vorliegen. Vorzugsweise wird das vorgelegte Stärkepulver unter gleichzeitigem Mischen mit einer feinverteilten Lösung des kationischen Polymers versetzt. Bevorzugt wird eine wässrige Lösung des kationischen Polymers eingesetzt. Gegebenenfalls können jedoch auch Lösungen in einem Gemisch aus Wasser und einem mit Wasser mischbaren Lösungsmittel eingesetzt werden. Die Polymermenge in der Lösung beträgt im allgemeinen etwa 0,05 bis 75 Gew.-%, bevorzugt 0,5 bis 50 Gew.-%, insbesondere 1 bis 30 Gew.-%.

Das Gewichtsmengenverhältnis von Stärke zu kationischem Polymer beträgt im allgemeinen etwa 1:0,0005 bis 1:2, bevorzugt etwa 1:0,001 bis 1:1.

Zur Herstellung der erfindungsgemäßen, mit kationischen Polymeren modifizierten Stärken wird vorzugsweise eine Lösung der Polymere zu den Stärken gegeben, intensiv gemischt und gleichzeitig oder nach dem Vermischen getrocknet, so daß ein festes, bevorzugt (bis auf enthaltene Restfeuchte) trockenes und insbesondere rieselfähiges, pulverförmiges oder granuläres Produkt anfällt. Bevorzugt erfolgt die Trocknung und/oder die Modifizierung der Stärke unter Wärmezufuhr. Die Herstellung kann dabei in allgemein üblichen Vorrichtungen, wie in geschlossenen Behältern mit Mischvorrichtungen, z.B. rotierbaren Rohren oder Trommeln erfolgen. Vorzugsweise wird die Polymerlösung in möglichst feinverteilter Form zu der trockenen, im wesentlichen wasserfreien Stärke gegeben.

Bevorzugt erfolgt die Herstellung, d. h. die Modifizierung und/oder Trocknung der erfindungsgemäßen, mit kationischen Polymeren modifizierten Stärken in einer Mischvorrichtung, in einer Vorrichtung zum Sprühtrocknen oder Sprühgranulieren oder in einer Wirbelschicht. Hierbei werden Lösungen der kationischen Polymere z.B. unter Einsatz von Düsen feinverteilt auf die Stärke gesprüht und das resultierende Gemisch getrocknet. Verfahren zur Sprühtrocknung oder Sprühgranulierung sind dem Fachmann bekannt. Im vorliegenden Fall kann die Gewinnung von festen Produkten z.B. in Sprühtürmen herkömmlicher Bauart erfolgen. Gegebenenfalls können inerte Gase, wie beispielsweise Stickstoff, als Trocknungsgase verwendet werden, die im Gegenstrom oder vorzugsweise im Gleichstrom mit den Polymertropfen durch den Trocknungsturm geleitet werden. Des weiteren eignen sich zur Modifizierung und/oder Compoundierung der erfindungsgemäßen Stärken auch Intensivmischer, wobei die Stärke als Wirbelschicht vorgelegt wird. Die Polymerlösung kann dann über eine geeignete Vorrichtung, beispielsweise eine Düsenlanze, in den Mischer eingedüst werden. Für dieses Verfahren geeignete Mischer sind z.B. die Intensivmischer der Firma Eirich, Hardheim. Die Modifizierung und Trocknung der Stärke erfolgt im allgemeinen bei einer Temperatur von etwa 10 bis 130°C, bevorzugt 20 bis 100°C. Die Polymermodifizierung kann bei Unterdruck, Normal- oder Überdruck erfolgen. Im allgemeinen erfolgt die Modifizierung bei einem Druck von 100 bis 2 x 10⁵ Pa (0,001 bis 2 bar), bevorzugt 10⁴ bis 10⁵ Pa (0,1 bis 1 bar). Die Dauer der Modifizierung beträgt etwa 0,25 bis 5 Stunden, vorzugsweise 0,5 bis 3 Stunden pro kg Stärke.

Erfolgt die Herstellung der kationisch modifizierten Stärken durch Sprühtrocknung oder Sprühgranulierung so kann der entstandene Feststoff in üblicher Weise von dem Gasstrom, beispielsweise durch ein Zyklon, getrennt werden.

Vorzugsweise erfolgt die Herstellung der modifizierten Stärken in einem geschlossenen Behälter mit Mischvorrichtung, insbesondere einem rotierbaren Rohr oder einer Trommel, in der die trockene, rieselfähige Stärke vorgelegt und unter intensivem Mischen mit einer feinverteilten Lösung des Polymers, versetzt wird. Die Zugabe der Polymerlösung erfolgt dabei bevorzugt unter Versprühen.

Nach einer weiteren bevorzugten Ausführungsform des erfindungsgemäßen Verfahrens wird die Stärke in dem zur Modifizierung eingesetzten Behälter in Form einer Wirbelschicht vorgelegt und die Polymerlösung in den Behälter eingesprüht. Die zur Modifizierung eingesetzte Stärkemenge ist so zu wählen, daß eine leichte Verwirbelung ermöglicht wird.
Durch die zuvor beschriebenen verfahrenstechnischen Maßnahmen wird erzielt, daß die Stärke bei Aufbringen der kationischen Polymere im wesentlichen nicht verklebt.

Ein weiterer Gegenstand der Erfindung sind die nach dem erfindungsgemäßen Verfahren erhaltenen, mit kationischem Polymer modifizierten Stärken in fester Form. Vorteilhafterweise sind diese pulverförmig oder granulär und eignen sich als Zwischenprodukte und Handelsform zum Vertrieb an weiterverarbeitende Betriebe. Da sie im wesentlichen frei von Wasser und übrigen Lösungsmitteln sind, gestaltet sich der Transport zum Anwender und die Lagerung bis zur Verwendung kostengünstig. Eine Dosierung der kationischen Modifizierungsmittel durch den Anwender entfällt.

Ein weiterer Gegenstand der Erfindung ist der Aufschluß der zuvor beschriebenen, vorzugsweise im wesentlichen wasserfreien, kationisch modifizierten Stärken. Verfahren zum Aufschluß von Stärken sind dem Fachmann bekannt. So beschreibt die WO 96/13525 ein Verfahren zum Aufschluß kationisch modifizierter Stärken, wobei im Gegensatz zur vorliegenden Erfindung eine wässrige Stärkesuspension mit kationischen Polymeren modifiziert und im Sinne eines einstufigen Verfahrens bei erhöhten Temperaturen und erhöhtem Druck zugleich aufgeschlossen wird. Auf die in dieser Schrift genannten Aufschlußbedingungen wird hiermit Bezug genommen.

Unter Stärkeaufschluß versteht man allgemein die Überführung der festen Stärkekörner in eine wasserlösliche Form, wobei Überstrukturen (Belixbildung, intermolekulare H-Brücken etc.) aufgehoben werden, ohne daß es zu einem wesentlichen Abbau von den die Stärke aufbauenden Amylose- und Amylopektineinheiten zu Oligosäcchariden oder Glucose kommt. Zum Aufschuß werden z.B. wässrige Suspensionen oder Lösungen der zuvor genannten kationisch modifizierten Stärken auf Temperaturen, die im allgemeinen oberhalb der Verkleisterungstemperatur der Stärken liegen, erhitzt. Dabei liegt die Temperatur im allgemeinen in einem Bereich von etwa 60 bis 180°C, bevorzugt 65 bis 150°C, insbesondere 70 bis 110°C. Der Aufschluß kann unter Umgebungsdruck oder unter Überdruck erfolgen. Nach einer bevorzugten Ausführungsform des erfindungsgemäßen Verfahrens erfolgt der Aufschluß bei einem Druck im Bereich von 10⁵ bis 10⁶ Pa (1,0 bis 10,0 bar), bevorzugt 1,2 x 10⁵ bis 7,9 x 10⁵ Pa (1,2 bis 7,9 bar). Desweiteren erfolgt der Stärkeaufschluß vorzugsweise unter Einwirkung von Scherkräften auf die Suspension oder Lösung, z.B. durch Rühren bei einer Rührergeschwindigkeit von etwa 100 bis 2000 U/min, bevorzugt 200 bis 1000 U/min.

Nach einer besonders bevorzugten Ausführungsform des erfindungsgemäßen Verfahrens findet der Stärkeaufschluß bei Temperaturen oberhalb von 100°C, vorzugsweise bei 105 bis 170°C, bei erhöhtem Druck von etwa 1,2 x 10⁵ bis etwa 7,9 x 10⁵ Pa (etwa 1,2 bis etwa 7,9 bar) und gleichzeitigem kräftigen Rühren bei geringer Verweilzeit statt. Bei diesen Aufschlußbedingungen ist die Abbaurate bzgl. der Molekulargewichte der eingesetzten kationisch modifizierten Stärken gering. So wird das Molekulargewicht der modifizierten Stärken im allgemeinen um höchstens 20 %, bevorzugt um höchstens 10 % verringert. Die Reaktion kann in den allgemein üblichen Apparaturen durchgeführt werden, in denen Stärke in der Technik aufgeschlossen wird. Bei Temperaturen oberhalb von etwa 100°C ist die Umsetzung in druckdichten Apparaturen, wie z.B. druckdichten Rührkesseln, Autoklaven, Knetern, Jet-Kochern, Extrudern etc. erforderlich.
Die Lösung der Stärken zur Durchführung des Aufschlusses erfolgt in Wasser oder einem wasserhaltigen Lösungsmittel, bevorzugt in Abwesenheit von Oxidationsmitteln, Polymerisationsinitiatoren und Alkalien. Die erforderliche Kontaktzeit hängt von der verwendeten Temperatur ab. Im allgemeinen erfolgt der Aufschluß der Stärke über einen Zeitraum von 0,1 min bis 6 Stunden, bevorzugt etwa 3 min bis 5 Stunden, inbesondere bevorzugt etwa 5 bis 30 min. Erfolgt der Aufschluß bei höheren Temperaturen, z.B. bei Temperaturen oberhalb von 100°C, so benötigt man im allgemeinen kürzere Kontakzeiten, z.B. etwa 0,1 bis 15 min.

Zum Stärkeaufschluß können gewünschtenfalls den Aufschluß der Stärke unterstützende Additive sowie das Molekulargewicht der Stärke beeinflussende Additive, wie z.B. Säuren oder weitere Papierhilfsmittel zugesetzt werden.

Ein weiterer Gegenstand der Erfindung sind die durch einen wie zuvor beschriebenen Aufschluß erhältlichen, aufgeschlossenen, kationisch modifizierten Stärken.

Für das erfindungsgemäße Verfahren eignen sich im allgemeinen Polymere, die kationische oder kationisierbare Gruppen enthalten. Solche Gruppen leiten sich im allgemeinen von Heteroatomen, wie N, P, O, S etc. ab, die befähigt sind, z.B. nach Umsetzung mit einer Säure oder einem Alkylierungsmittel, stabile Kationen auszubilden. Für das erfindungsgemäße Verfahren eignen sich bevorzugt Polymere, die Amino- und/oder Ammoniumgruppen enthalten. Diese Verbindungen werden auch als kationische Polymere bezeichnet. Geeignete kationische Polymere sind in der EP-A-0 282 761, EP-A-0 301 372, EP-A-0 418 343 und WO 96/13525 beschrieben, auf die hiermit in vollem Umfang Bezug genommen wird.

Die geeigneten kationischen Polymere enthalten Einheiten von Monomeren mit kationischen oder kationisierbaren Gruppen, ausgewählt unter
a) N-Vinylaminen der Formel I 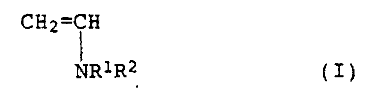 worin
   R¹ und R² unabhängig voneinander für Wasserstoff oder Alkyl stehen;
b) Aziridinen (Alkyleniminen) der Formel II 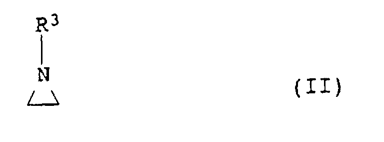 worin R³ für Wasserstoff oder Alkyl steht;
c) N-Vinylimidazolinen der Formel III 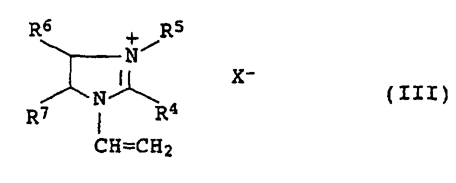 worin
   - R⁴ und R⁵: unabhängig voneinander für Wasserstoff, Alkyl, Aryl und Alkylaryl stehen,
   - R⁶ und R⁷: unabhängig voneinander für Wasserstoff und Alkyl stehen, und
   - X⁻: für ein Gegenion, vorzugsweise ausgewählt unter F⁻, Cl⁻, Br⁻, I⁻, SO₄²⁻, HSO₄⁻, Alkyl-O-SO₃H⁻, R⁸-COO⁻ steht, wobei R⁸ für einen Rest, ausgewählt unter Alkyl, Cycloalkyl, Aryl, Cycloalkylalkyl und Arylalkyl steht, welcher ggf. substituiert sein kann;
   sowie gegebenenfalls weitere Comonomere einpolymerisiert.

Im Rahmen der vorliegenden Erfindung steht der Ausdruck 'Alkyl' für geradkettige und verzweigte Alkylgruppen. Vorzugsweise handelt es sich dabei um geradkettige oder verzweigte C₁-C₁₈-Alkyl-, insbesondere C₁-C₈-Alkyl-, bevorzugter C₁-C₆-Alkyl- und besonders bevorzugt C₁-C₄-Alkylgruppen. Beispiele für Alkylgruppen sind insbesondere Methyl, Ethyl, Propyl, Isopropyl, n-Butyl, 2-Butyl, 2-Methylpropyl, t.-Butyl, n-Pentyl, 2-Pentyl, 3-Pentyl, 2-Methylbutyl, 3-Methylbutyl, 1,2-Dimethylpropyl, 1,1-Dimethylpropyl, 2,2-Dimethylpropyl, n-Hexyl, 2-Hexyl, 3-Hexyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylbutyl, 2,2-Dimethylbutyl, 2,3-Dimethylbutyl, 1,1-Dimethylbutyl, 2,2-Dimethylbutyl, 3,3-Dimethylbutyl, 1,1,2-Trimethylpropyl, 1,2,2-Trimethylpropyl, 2-Ethylbutyl, 1-Ethyl-2-methylpropyl, n-Heptyl, 2-Heptyl, 3-Heptyl, 4-Heptyl, 2-Ethylpentyl, 2-Ethylhexyl, Octyl, Decyl, Dodecyl etc.

Substituierte Alkylreste weisen vorzugsweise 1, 2 oder 3 Substituenten, insbesondere 1 oder 2 Substituenten in beliebiger Position auf.

Bei der Cycloalkylgruppe handelt es sich vorzugsweise um eine C₅-C₇-Cycloalkylgruppe, wie Cyclopentyl, Cyclohexyl oder Cycloheptyl.

Wenn die Cycloalkylgruppe substituiert ist, weist sie vorzugsweise 1, 2, 3, 4 oder 5, insbesondere 1, 2 oder 3 Alkylreste als Substituenten auf.

Aryl steht vorzugsweise für Phenyl oder Naphthyl und insbesondere für Phenyl.

Substituierte Aryl- oder cycloalkylreste weisen als Substituenten, z.B. C₁-C₈-Alkyl, C₁-C₈-Alkoxy, Halogen, Nitro oder Carboxyl auf. Dabei sind in der Regel 1, 2 oder 3 Substituenten bevorzugt.

Arylalkyl steht vorzugsweise für Phenyl-C₁-C₄-alkyl, insbesondere Benzyl oder Phenethyl.

Nach einer bevorzugten Ausführungsform enthalten die kationischen Polymere Einheiten von N-Vinylaminen der Formel (I) einpolymerisiert, worin R¹ für Wasserstoff oder Alkyl und R² für Wasserstoff steht. Solche Polymere sind z.B. durch vollständige oder partielle Hydrolyse von Homo- oder Copolymeren von offenkettigen N-Vinylcarbonsäureamiden der Formel (V) 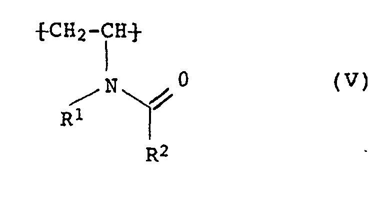 worin R¹ und R² unabhängig voneinander für Wasserstoff oder C₁-C₆-Alkyl stehen unter Abspaltung der -COR²-Gruppe erhältlich. Geeignete N-Vinylcarbonsäureamide sind beispielsweise N-Vinylformamid, N-Vinyl-N-methylformamid, N-Vinyl-N-ethylformamid, N-Vinyl-N-propylformamid, N-Vinyl-N-isopropylformamid, N-Vinyl-N-butylformamid, N-Vinyl-N-sek.butylformamid, N-Vinyl-N-tert.butylformamid, N-Vinyl-N-pentylformamid. Zur Herstellung der Polymere können diese Monomere entweder alleine oder in Mischungen polymerisiert werden. Vorzugsweise geht man von Homopolymeren des N-Vinylformamids aus.

Die Hydrolyse der einpolymerisierten N-Vinylcarbonsäureamide zu den entsprechenden Aminen erfolgt nach gängigen Methoden gemäß dem Stand der Technik in Gegenwart von Hydrolysemitteln, wie z.B. Mineralsäuren, vorzugsweise Salzsäure und Schwefelsäure, oder Basen, insbesondere Alkali- und Erdalkalihydroxiden oder Ammoniak. Besonders bewährt hat sich die Hydrolyse in wässriger Lösung.

Die hydrolysierten Polymerisate, die Einheiten der Formel (I) enthalten, worin R² für Wasserstoff steht, haben K-Werte von 15 bis 300, vorzugsweise 30 bis 200, bestimmt nach H. Fikentscher in 5 gew.-%iger wässriger Kochsalzlösung bei pH 7, einer Temperatur von 25°C und einer Polymerkonzentration von 0,5 Gew.-%.

Die kationischen Polymere mit einpolymerisierten Vinylamineinheiten der Formel (I) können neben N-Vinylcarbonsäureamideinheiten der Formel (V) zusätzlich weitere Comonomereinheiten enthalten.

Bevorzugt werden Copolymere von Vinylaminen eingesetzt, dessen Comonomere ausgewählt sind unter N-Vinylcarbonsäureamiden, Vinylalkohol, Estern von Vinylalkohol mit Monocarbonsäuren, α,β-monoethylenisch ungesättigten Mono- und/oder Dicarbonsäuren und deren Salzen, Estern, Amiden und Nitrilen, Heterocyclen mit N-Vinylgruppen, α,β-monoethylenisch ungesättigten Sulfonsäuren und deren Estern, und deren Mischungen.

Vorzugsweise werden kationische Polymerisate eingesetzt, die
A) 0,1 bis 100 Mol-% Vinylamineinheiten der Formel (I),
B) 0 bis 99,9 Mol-%, bevorzugt 1 bis 99 Mol-%, Einheiten weiterer monoethylenisch ungesättigter Monomere, ausgewählt unter N-Vinylformamid, Vinylalkohol, Estern von Vinylalkohol mit C₁-C₈-Monocarbonsäuren, C₁-C₈-Vinylethern, α,β-ungesättigten C₃-C₁₈-Mono- und/oder C₄-C₂₀-Dicarbonsäuren und deren Salzen, Estern, Amiden und Nitrilen sowie N-Vinyllactamen,
C) 0 bis 5 Mol-% Monomere mit mindestens zwei ethylenisch ungesättigten, nicht konjugierten Doppelbindungen,
einpolymerisiert enthalten.

Beispiele für Monomere der Gruppe B) sind neben den genannten N-Vinylcarbonsäureamiden z.B. Vinylalkohol, der durch partielle oder vollständige Hydrolyse entsprechender Vinylester, bevorzugt von Vinylacetat, erhältlich ist sowie Vinylester von gesättigten Carbonsäuren mit 1 bis 6 Kohlenstoffatomen, z.B. Vinylformiat, Vinylacetat, Vinylpropionat und Vinylbutyrat. Geeignet sind auch ungesättigte C₃- bis C₆-Mono- oder Dicarbonsäuren, wie z.B. Acrylsäure, Methacrylsäure, Maleinsäure, Crotonsäure, Itaconsäure und Vinylessigsäure sowie deren Alkalimetall- und Erdalkalimetallsalze, Ester, Amide und Nitrile, beispielsweise Methylacrylat, Methylmethacrylat, Ethylacrylat und Ethylmethacrylat oder Glykolbzw. Polyglykolester ethylenisch ungesättigter Carbonsäuren, wobei jeweils nur eine OH-Gruppe der Glykole und Polyglykole verestert ist, z.B. Hydroxyethylacrylat, Hydroxyethylmethacrylat, Hydroxypropylacrylat, Hydroxybutylacrylat, Hydroxypropylmethacrylat, Hydroxybutylmethacrylat sowie die Acrylsäuremonoester von Polyalkylenglykolen eines Molekulargewichts von etwa 1.500 bis 10.000. Weiterhin geeignet sind die Ester von ethylenisch ungesättigten Carbonsäuren mit Aminoalkoholen, wie z.B. Dimethylaminoethylacrylat, Dimethylaminoethylmethacrylat, Diethylaminoethylacrylat, Diethylaminopropylmethacrylat, Diethylaminopropylacrylat, Dimethylaminopropylmethacrylat, Diethylaminopropylacrylat, Diethylaminopropylmethacrylat, Dimethylaminobutylacrylat und Diethylaminobutylacrylat. Die basischen Acrylate werden in Form der freien Basen, der Salze mit Mineralsäuren, wie z.B. Salzsäure, Schwefelsäure und Salpetersäure, der Salze mit organischen Säuren, wie Ameisensäure oder Benzolsulfonsäure, oder in quaternisierter Form eingesetzt. Geeignete Quaternisierungsmittel sind beispielsweise Dimethylsulfat, Diethylsulfat, Methylchlorid, Ethylchlorid oder Benzylchlorid.

Weiterhin eignen sich als Comonomere B) ungesättigte Amide, wie beispielsweise Acrylamid, Methacrylamid sowie N-Alkylmono- und -diamide mit Alkylresten von 1 bis 6 C-Atomen, wie z.B. N-Methylacrylamid, N,N-Dimethylacrylamid, N-Methylmethacrylamid, N-Ethylacrylamid, N-Propylacrylamid und tert.-Butylacrylamid sowie basische (Meth)acrylamide, wie z.B. Dimethylaminoethylacrylamid, Dimethylaminoethylmethacrylamid, Diethylaminoethylacrylamid, Diethylaminoethylmethacrylamid, Dimethylaminopropylacrylamid, Diethylaminopropylacrylamid, Dimethylaminopropylmethacrylamid und Diethylaminopropylmethacrylamid.

In Frage als Comonomere B) kommen auch Vinylether mit Alkylresten mit 1 bis 6 Kohlenstoffatomen, z.B. Methylvinylether, Ethylvinylether, Propylvinylether, Isopropylvinylether, n-Butylvinylether, n-Pentylvinylether und n-Hexylvinylether oder Vinylether mit aromatischen Substiuenten, wie z.B. Phenylvinylether oder Benzylvinylether.

Weiterhin sind als Comonomere B) N-Vinylpyrrolidon, N-Vinylcaprolactam, Acrylnitril, Methacrylnitril, N-Vinylimidazol sowie substituierte N-Vinylimidazole, wie z.B. N-Vinyl-2-methylimidazol, N-Vinyl-4-methylimidazol, N-Vinyl-5-methylimidazol, N-Vinyl-2-ethylimidazol, und N-Vinylimidazoline, wie z.B. Vinylimidazolin, N-Vinyl-2-methylimidazolin, und N-Vinyl-2-ethylimidazolin geeignet. N-Vinylimidazole und N-Vinylimidazoline werden außer in Form der freien Basen auch in mit Mineralsäuren oder organischen Säuren neutralisierter oder in quaternisierter Form eingesetzt, wobei die Quaternisierung vorzugsweise mit Dimethylsulfat, Diethylsulfat, Methylchlorid oder Benzylchlorid vorgenommen wird.

Weiterhin sind als Comonomere B) Sulfogruppen enthaltende Monomere, wie beispielsweise Vinylsulfonsäure, Allylsulfonsäure, Methallylsulfonsäure, Styrolsulfonsäure oder Acrylsäure-3-sulfopropylester geeignet.

Bei der Verwendung von basischen Comonomeren B), wie z.B. basischen Acrylestern und -amiden, kann oftmals auf eine Hydrolyse der N-Vinylcarbonsäureamide verzichtet werden. Die Copolymerisate umfassen auch Terpolymerisate und solche Polymerisate, die zusätzlich mindestens ein weiteres Monomer einpolymerisiert enthalten.

Die zuvorgenannten Polymerisate auf Basis von Vinylamineinheiten können weiterhin 0 bis 5 Mol-% Monomereinheiten mit mindestens zwei ethylenisch ungesättigten, nicht konjugierten Doppelbindungen einpolymerisiert enthalten. Derartige Comonomere C) werden Üblicherweise bei der Copolymerisation als Vernetzer verwendet.

Die Mitverwendung dieser Comonomere bei der Copolymerisation bewirkt eine Erhöhung der Molmassen der Copolymerisate. Geeignete Verbindungen C) sind z.B. Methylenbisacrylamid, Ester von Acrylsäure und Methacrylsäure mit mehrwertigen Alkoholen, z.B. Glykoldiacrylat, Glycerintriacrylat, Glykoldimethacrylat, Glycerintrimethacrylat sowie mindestens zweifach mit Acrylsäure oder Methacrylsäure veresterte Polyole, wie Penthaerythrit und Glukose. Geeignete Vernetzer sind außerdem Divinylbenzol, Divinyldioxan, Pentaerythrittriallylether, Pentaallylsucrose, Divinylharnstoff und Divinylethylenharnstoff.

Insbesondere werden zur kationischen Modifizierung der Stärke Copolymere eingesetzt, die
1) 1 bis 100 Mol-% Vinylamin-Einheiten,
2) 0 bis 99 Mol-% Monomereinheiten, ausgewählt unter Vinylformiat, Vinylacetat, Vinylpropionat, N-Vinylformamid, Vinylalkohol, Acrylnitril und N-Vinylpyrrolidon,
einpolymerisiert enthalten.

Bevorzugt sind hydrolysierte Homopolymerisate von N-Vinylformamid sowie Copolymerisate von N-Vinylformamid mit Vinyl-amin-Einheiten 1) und weiteren Monomereinheiten 2) mit einem Hydrolysegrad von 2 bis 100, vorzugsweise 30 bis 95 Mol-%.

Bei Copolymerisaten, die Vinylester einpolymerisiert enthalten, tritt neben der Hydrolyse der N-Vinylformamideinheiten eine Hydrolyse der Estergruppen unter Bildung von Vinylalkoholeinheiten ein. Einpolymerisiertes Acrylnitril wird ebenfalls bei der Hydrolyse chemisch verändert, wobei u.a. Amid- und/oder Carboxylgruppen entstehen.

Weiterhin können die kationischen Polymerisate Aziridine b) der Formel (II) als Monomere enthalten. Dabei wird bevorzugt Ethylenimin verwendet, d.h. der Rest R³ steht vorzugsweise für Wasserstoff.

Vorzugsweise handelt es sich bei den Polymerisaten dann um Homopolymerisate, d.h. um Polyethylenimine, die durch Polymerisieren von Ethylenimin in Gegenwart von sauren Katalysatoren, wie Ammoniumhydrogensulfat, Salzsäure oder chlorierten Kohlenwasserstoffen, wie Methylchlorid, Ethylenchlorid, Tetrachlorkohlenstoff oder Chloroform erhältlich sind. Solche Polyethylenimine haben beispielsweise in 50 gew.-%iger wässriger Lösung eine Viskosität von etwa 500 bis 33.000, vorzugsweise 1.000 bis 31.000 mPa.s (gemessen nach Brookfield bei 20°C und 20 Upm). Zu den kationischen Polymeren dieser Gruppe gehören auch mit Ethylenimin gepropfte Polyamidoamine, die gegebenenfalls noch durch Umsetzung mit einem mindestens bifunktionellen Vernetzer vernetzt sein können. Produkte dieser Art werden beispielsweise durch Kondensieren einer Dicarbonsäure, wie Adipinsäure, mit einem Polyalkylenpolyamin, wie Diethylentriamin oder Triethylentetramin, Pfropfen mit Ethylenimin und Reaktion mit einem mindestens bifunktionellen Vernetzer, z.B. Bischlorhydrinäther von Polyalkylenglykolen hergestellt und werden z.B. in der US-A-4,144,123 und US-A-3,642,572 beschrieben.

Als kationische Polymerisate eignen sich auch Homo- und Copolymerisate von gegebenenfalls substituierten N-Vinylimidazolinen c) der Formel (III).

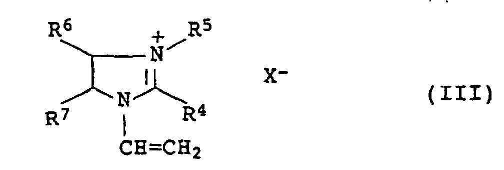

Diese können beispielsweise nach dem Verfahren der DE-B-11 82 826 hergestellt werden, wobei gegebenenfalls Copolymerisate zusammen mit Acrylamid und/oder Methacrylamid in wässrigem Medium bei pH-Werten von 0 bis 8, vorzugsweise von 1,0 bis 6,8 in Gegenwart von Polymerisationsinitiatoren, die in Radikale zerfallen, hergestellt werden.

Vorzugsweise setzt man bei der Polymerisation 1-Vinyl-2-imidazolin-Salze der Formel (III) ein, wobei R⁶ und R⁷ beide für Wasserstoff stehen.

Das Gegenion X⁻ in der Formel (III) kann prinzipiell jeder beliebige Säurerest einer anorganischen oder einer organischen Säure sein. Die Monomeren der Formel (III) werden erhalten, indem man die freien Basen, d.h. 1-Vinyl-2-imidazoline, mit der äquivalenten Menge einer Säure neutralisiert. Die Vinylimidazoline können neben den zuvor genannten Säureresten auch beispielsweise mit Trichloressigsäure, Benzolsulfonsäure oder Toluolsulfonsäure neutralisiert werden. Außer Salzen von 1-Vinyl-2-imidazolinen kommen als Monomere auch quaternisierte 1-Vinyl-2-imidazoline in Betracht. Sie werden hergestellt, indem man 1-Vinyl-2-imidazoline, die gegebenenfalls wie zuvor beschrieben substituiert sein können, mit bekannten Quaternisierungsmitteln umsetzt. Als Quaternisierungsmittel kommen beispielsweise C₁- bis C₁₈-Alkylchloride oder -bromide, Benzylchlorid oder -bromid, Epichlorhydrin, Dimethylsulfat und Diethylsulfat in Frage. Vorzugsweise verwendet man Epichlorhydrin, Benzylchlorid, Dimethylsulfat und Methylchlorid.

Zur Herstellung von wasserlöslichen Homopolymerisaten werden die Verbindungen der Formeln (III) vorzugsweise in wässrigem Medium polymerisiert.

vorzugsweise verwendet man als kationische Polymerisate Copolymerisate von Verbindungen der Formel (III) mit Acrylamid und/oder Methacrylamid. Diese Copolymerisate enthalten die Verbindungen der Formel (III) dann lediglich in wirksamen Mengen, d.h. in einer Menge von 1 bis 50 Gew.-%, vorzugsweise 10 bis 40 Gew.-%. Für die Modifizierung nativer Stärken besonders geeignet sind Copolymerisate aus 60 bis 85 Gew.-% Acrylamid und/oder Methacrylamid und 15 bis 40 Gew.-% N-Vinylimidazolin oder N-Vinyl-2-methylimidazolin. Die Copolymerisate können weiterhin durch Einpolymerisieren von anderen Monomeren, wie Styrol, N-Vinylformamid, Vinylformiat, Vinylacetat, Vinylpropionat, C₁- bis C₄-Alkylvinylether, N-Vinylpyridin, N-Vinylpyrrolidon, N-Vinylimidazol, ethylenisch ungesättigten C₃- bis C₅-Carbonsäuren sowie deren Estern, Amiden und Nitrilen, Natriumvinylsulfonat, Vinylchlorid und Vinylidenchlorid in Mengen von allgemein bis zu 25 Gew.-% modifiziert werden. Besonders geeignet für die Modifizierung nativer Stärken sind Copolymerisate, die
1) 70 bis 97 Gew.-% Acrylamid und/oder Methacrylamid,
2) 2 bis 20 Gew.-% N-Vinylimidazolin oder N-Vinyl-2-methylimidazolin und
3) 1 bis 10 Gew.-% N-Vinylimidazol
einpolymerisiert enthalten. Diese Copolymerisate werden durch radikalische Copolymerisation der Monomeren 1), 2) und 3) nach bekannten Polymerisationsverfahren hergestellt. Sie haben K-Werte im Bereich von 80 bis 150 (bestimmt nach H. Fikentscher in 5%iger wässriger Kochsalzlösung bei 25°C und einer Polymerkonzentration von 0,5 Gew.-%).

Bei dem erfindungsgemäßen Verfahren können allgemein übliche Stärken eingesetzt werden, z.B. native Stärken aus der Gruppe Maisstärke, Kartoffelstärke, Weizenstärke, Reisstärke, Tapiokastärke, Sagostärke, Sorghumstärke, Maniokstärke, Erbsenstärke oder Mischungen der genannten nativen Stärken. Insbesondere werden solche Stärken verwendet, die einen Amylopektingehalt von mindestens 80 Gew.-% haben. Solche Stärken können beispielsweise durch Stärkefraktionierung üblicher nativer Stärken oder durch Züchtungsmaßnahmen aus solchen Pflanzen gewonnen werden, die praktisch reine Amylopektinstärke produzieren, wie in Günther Tegge, Stärke und Stärkederivate, Hamburg, Bers-Verlag 1984, Seite 157-160 beschrieben. Stärken mit einem Amylopektingehalt von mindestens 80 Gew.-% sind im Handel erhältlich. Sie werden im allgemeinen als Wachsmaisstärke, Wachskartoffelstärke oder Wachsweizenstärke bezeichnet. Neben den nativen Stärken eignen sich auch hydrolytisch oder enzymatisch abgebaute Stärken, wie beispielsweise Dextrine, wie Weiß- oder Gelbdextrine und Maltodextrine, oder oxidierte Stärken, wie z.B. Dialdehydstärke. Weiterhin sind chemisch modofizierte Stärken, z.B. mit anorganischen oder organischen Säuren veresterte, insbesondere phosphatierte und acetylierte Stärken sowie mit organischen Halogenverbindungen, Epoxiden oder Sulfaten veretherte Stärken geeignet. Stärken und Verfahren zu ihrem Abbau und ihrer chemischen Modifizierung werden in Ullmann's Encyclopedia of Industrial Chemistry, 5. Aufl., Bd. A25, S. 2ff beschrieben, worauf hier Bezug genommen wird. Die zuvor genannten Stärken können jeweils einzeln oder als Mischungen eingesetzt werden.

Ein weiterer Gegenstand der Erfindung ist die Verwendung der erfindungsgemäß mit kationischen Polymerisaten modifizierten und aufgeschlossenen Stärken als Trocken- und Naßverfestigungsmittel sowie als Entwässerungs- und Retentionsmittel für Papier, Pappe und Karton. Sie werden dem Papierstoff im allgemeinen in einer Menge von 0,5 bis 3,5, vorzugsweise 1,2 bis 2,5 Gew.-%, bezogen auf trockenen Papierstoff zugesetzt. Der pH-Wert der Stärkelösung beträgt 2,0 bis 9,0, vorzugsweise 2,5 bis 8,0. Die Lösung des Verfestigungsmittels in Wasser hat bei einer Feststoffkonzentration von 3,5 Gew.-% eine Viskosität von 50 bis 10000, vorzugsweise 80 bis 3000 mPa.s, gemessen in einem Brookfield-Viskosimeter bei 20 Upm und einer Temperatur von 20°C.

Die erfindungsgemäßen Trockenverfestigungsmittel können bei der Herstellung von allen bekannten Papier-, Pappen- und Kartonqualitäten verwendet werden, z.B. Schreib-, Druck- und Verpackungspapieren. Die Papiere können aus einer Vielzahl verschiedenartiger Fasermaterialien hergestellt werden, beispielsweise aus Sulfitoder Sulfatzellstoff in gebleichtem oder ungebleichtem Zustand, Holzschliff, Altpapier, thermomechanischem Stoff (TMP) und chemothermomechanischem Stoff (CTMP). Der pH-Wert der Stoffsuspension liegt zwischen 4 und 10, vorzugsweise zwischen 6 und 8,5. Die Trockenverfestigungmittel können sowohl bei der Herstellung von Rohpapier für Papiere mit geringem Flächengewicht (LWC-Papieren) sowie für Karton verwendet werden. Das Flächengewicht der Papiere beträgt zwischen 30 und 200, vorzugsweise 35 und 150 g/m², während es bei Karton bis zu 600 g/m² betragen kann. Die erfindungsgemäß hergestellten Papierprodukte haben gegenüber solchen Papieren, die in Gegenwart einer gleichen Menge nativer Stärke hergestellt wurden, eine merklich verbesserte Festigkeit, die beispielsweise anhand der Reißlänge, des Berstdrucks, des CMT-Werts und des Weiterreißwiderstands quantitativ erfasst werden kann.

Ein weiterer Gegenstand der Erfindung sind die durch die Zugabe der zuvor beschriebenen polymermodifizierten Stärken verfestigten Papiere, Pappen und Kartons.

Die Erfindung wird anhand der folgenden, nicht einschränkenden Beispiele erläutert.

### Beispiele

Die in den Beispielen angegebenen Teile sind Gewichtsteile, die Prozentangaben beziehen sich auf das Gewicht.
Die Viskositäten der Verfestiger wurden in wässriger Lösung mit einer Feststoffkonzentration von 3,5 Gew.-% und einer Temperatur von 20°C in einem Brookfield-Viskosimeter bei 20 U/min bestimmt. Der K-Wert der Polymerisate wurde bestimmt nach H. Fikentscher, Cellulose Chemie 13 (1932), S. 58 ff., in einer 5%igen Kochsalzlösung bei 25°C und einer Polymerkonzentration von 0,5 Gew.-%.

Zur kationischen Modifizierung verwendetes Polymer:
Copolymerisat aus 95 Mol-% Vinylamin und 5 Mol-% Vinylformamid in wässriger Lösung, pH-Wert 7, Polymergehalt: 7,8 Gew.-%, gewichtsmittleres Molekulargewicht ca. 160.000 g/mol, Viskosität 1800 mPas, hergestellt durch Hydrolyse von Polyvinylformamid, K-Wert 90, mit Natronlauge.

### Beispiel 1

1600 g einer 97%igen nativen Kartoffelstärke wurden mit 0,3 g Aerosil® 200 (Rieselhilfe auf Siliciumdioxid-Basis der Fa. Degussa) intensiv vermischt und unter Stickstoffatmosphäre in einer drehbaren Glastrommel vorgelegt. Innerhalb von 45 min. wurden bei Raumtemperatur unter einem schwachen Vakuum von etwa 80 kPa (800 mbar) 250 g g Polymerlösung mit Hilfe von Stickstoff aufgesprüht, wobei die Trommel gleichmäßig mit 140 Upm gedreht wurde. Es resultierten 1850 g kationisierte Kartoffelstärke mit einem Feststoffgehalt von 85 Gew.-% und einer Ladungsdichte von + 0,04 meq/g (Kaliumpolyvinylsulfat). Die so modifizierte Stärke wurde darauf in einem Laborjetkocher bei 120°C gekocht.

### Beispiel 2

1600 g einer 80%igen nativen Kartoffelstärke wurden unter Stickstoffatmosphäre in einer drehbaren Glastrommel vorgelegt und auf 120°C erhitzt. Unter gleichmäßigem Drehen der Trommel mit 140 Upm wurden im Verlauf von 3 Stunden unter einem schwachen Vakuum von etwa 80 kPa (800 mbar) 350 g Polymerlösung mit Hilfe von Stickstoff aufgesprüht. Restmengen Wasser wurden während der Reaktion destillativ entfernt. Es resultierten 1440 g kationisierte Kartoffelstärke mit einem Feststoffgehalt von 93 Gew.-% und einer Ladungsdicht von + 0,02 meq/g (Kaliumpolyvinylsulfat). Die so modifizierte Stärke wurde darauf in einem Laborjetkocher bei 120°C gekocht.

### Beispiel 3 (Vergleich)

Native Kartoffelstärke nach Beispiel 1 wurde in einem Laborjetkocher bei 120°C gekocht. Zu dieser Stärke wurden 15 Gew.-% einer Polymerlösung (= 1,17 Gew.-% Polymer) zugesetzt. Die auf diese Weise modifizierte Stärke hatte eine Ladungsdichte von + 0,05 meq/g (Kaliumpolyvinylsulfat).

### Beispiel 4 (Vergleich)

Native Kartoffelstärke nach Beispiel 1 ohne Kationisierungsmittel mit einer Ladungsdichte von- 0,04 meq/g (Poly-DADMAC, DADMAC = Diallyldimethylammoniumchlorid) wurde in einem Laborjetkocher bei 120°C gekocht.

### Beispiel 5 (Vergleich)

Handelsübliche kationische Stärke HI-CAT® (Roquette), Ladungsdichte + 0,29 meq/g (Kaliumpolyvinylsulfat).

### Anwendungstechnische Beispiele

Zu einer Papierstoffsuspension, bestehend aus 40 % deinktem Zeitungsdruckpapier, 40 % undeinktem Zeitungsdruckpapier und 20 % gebleichtem Buchensulfitzellstoff mit einer Stoffdichte von 0,76 Gew.-% wurden jeweils 2 % (fest) der Stärken gemäß Beispiel 1 bis 5 zugesetzt.
1) Nach der Stärkezugabe wurden die Fasern abfiltriert und im Filtrat gemäß DIN 38 409 die CSB-Werte bestimmt.
2) Der Papierstoff wurde über ein Schopper-Riegler Gerät entwässert und die Entwässerungszeit (EWZ) gemäß DIN ISO 5267 bestimmt.
3) Aus dem Stoff wurden nach Stärkezugabe auf einem Rapid-Köthen-Blattbildner Papierblätter mit einem Flächengewicht von 120 g/m² hergestellt. Diese Blätter wurden auf ihre Festigkeit geprüft. Es wurden nach Standardmethoden Trockenberstdruck (TBD, DIN 2758), Flachstauchwiderstand (CMT = Concora Medium Test, DIN EN 23035 = ISO 3035) und Trockenreißlänge (TRL, DIN ISO 1924) bestimmt.

Die anwendungstechnischen Ergebnisse sind in nachfolgender Tabelle aufgeführt.

| Beispiel | CSB (mg/l) | EWZ (s/500 ml) | TBD (kPa) | CMT (N) | TRL (m) |
|---|---|---|---|---|---|
| 0-Wert | 147 | 102 | 167 | 131 | 2785 |
| 1 | 197 | 116 | 201 | 174 | 3329 |
| 2 | 130 | 86 | 211 | 180 | 3298 |
| 3 | 214 | 114 | 200 | 172 | 3221 |
| 4 | 255 | 117 | 181 | 151 | 3034 |
| 5 | 158 | 115 | 210 | 170 | 3345 |

Die erfindungsgemäßen Beispiele 1 und 2 zeigen, daß durch Zusatz von in Festsubstanz mit kationischen Polymeren modifizierter Kartoffelstärke der Papierstoff deutlich schneller entwässert wird. Darüber hinaus bewirken derartige Stärken gegenüber den Vergleichsbeispielen 3 bis 5 eine signifikante Verbesserung der Festigkeit des Papiers.

## Patentansprüche

1. Verfahren zur Herstellung von Stärke, die mit wenigstens einem kationischen Polymer modifiziert ist, **dadurch gekennzeichnet, daß** man trockene, rieselfähige Stärke vorlegt und darauf als kationisches Polymer ein partiell oder vollständig hydrolysiertes Homo- oder Copolymer von N-Vinylcarbonsäureamiden, ein Homo- oder Copolymer von N-Vinylimidazolen oder ein Polyalkylenimin aufbringt, ohne die Stärkepartikel zu verkleben.

2. Verfahren nach Anspruch 1, **dadurch gekennzeichnet, daß** man das vorgelegte Stärkepulver unter gleichzeitigem Mischen mit einer feinverteilten Lösung des kationischen Polymers versetzt.

3. Verfahren nach einem der vorhergehenden Ansprüche, **dadurch gekennzeichnet, daß** man die Stärke mit dem Polymer in einem Gewichtsverhältnis von 1:0,0005 bis 1:2 modifiziert.

4. Verfahren nach einem der vorhergehenden Ansprüche, **dadurch gekennzeichnet, daß** man das polymermodifizierte Stärkepulver trocknet.

5. Verfahren nach einem der vorhergehenden Ansprüche, **dadurch gekennzeichnet, daß** die Modifizierung und die Trocknung der modifizierten Stärke unabhängig voneinander bei einer Temperatur von 10 bis 130°C und bei einem Druck von 1x10² bis 2x10⁵ Pa erfolgen.

6. Verfahren nach einem der vorhergehenden Ansprüche, **dadurch gekennzeichnet, daß** man die modifizierte Stärke bei erhöhten Temperaturen und/oder erhöhtem Druck und/oder unter Einwirkung von Scherkräften sowie gegebenenfalls unter Zugabe von Additiven aufschliesst.

7. Verfahren nach einem der vorhergehenden Ansprüche, **dadurch gekennzeichnet, daß** man zur Modifizierung ein kationisches Polymer einsetzt, das Ammonium- und/oder Aminogruppen enthält.

8. Mit einem kationischen Polymer modifizierte, pulverförmige oder granuläre Stärken, erhältlich durch ein Verfahren nach einem der Ansprüche 1 bis 7 in aufgeschlossener oder nichtaufgeschlossener Form.

9. Verwendung von aufgeschlossener polymermodifizierter Stärke nach Anspruch 8 als Trocken- und Naßverfestigungsmittel sowie als Entwässerungs- und Retentionsmittel bei der Herstellung von Papier, Pappe und Karton.

10. Papier, Pappe und Karton, verfestigt durch Zugabe von aufgeschlossener, polymermodifizierter Stärke gemäß Anspruch 8.

## Claims

1. A process for the preparation of starch which is modified with at least one cationic polymer, wherein dry, free-flowing starch is initially taken and a partially or completely hydrolyzed homo- or copolymer of N-vinylcarboxamides, a homo- or copolymer of N-vinylimidazoles or a polyalkyleneimine as cationic polymer is then applied without the starch particles sticking together.

2. A process as claimed in claim 1, wherein a finely divided solution of the cationic polymer is added to the initially taken starch powder with simultaneous mixing.

3. A process as claimed in any of the preceding claims, wherein the starch is modified with the polymer in a weight ratio of from 1:0.0005 to 1:2.

4. A process as claimed in any of the preceding claims, wherein the polymer-modified starch powder is dried.

5. A process as claimed in any of the preceding claims, wherein the modification and drying of the modified starch are carried out, independently of one another, at from 10 to 130°C and at from 1 x 10² to 2 x 10⁵ Pa.

6. A process as claimed in any of the preceding claims, wherein the modified starch is digested at elevated temperatures and/or superatmospheric pressure and/or under the action of shear forces and, if required, with the introduction of additives.

7. A process as claimed in any of the preceding claims, wherein a cationic polymer which contains ammonium or amino groups is used for the modification.

8. A pulverulent or granular starch modified with a cationic polymer and obtainable by a process as claimed in any of claims 1 to 7, in digested or undigested form.

9. The use of the digested polymer-modified starch as claimed in claim 8 as a dry strength agent and wet strength agent and as a drainage aid and retention aid in the production of paper, board and cardboard.

10. A paper, board or cardboard, strengthened by the addition of the digested, polymer-modified starch as claimed in claim 8.

## Revendications

1. Procédé de préparation d'amidon qui est modifié avec au moins un polymère cationique et **caractérisé en ce que** l'on prédispose un amidon sec pouvant s'écouler sur lequel on dispose, en tant que polymère cationique, un homopolymère ou un copolymère partiellement ou complètement hydrolysé des amides de l'acide N-vinylcarboxylique, un homopolymère ou un copolymère des N-vinylimidazoles ou une polyalcène-imine, en évitant que les particules d'amidon s'agglutinent.

2. Procédé selon la revendication 1, **caractérisé en ce que** l'on ajoute à la poudre d'amidon prédisposée une solution du polymère cationique finement dispersée, en mélangeant simultanément.

3. Procédé selon l'une quelconque des revendications précédentes, **caractérisé en ce que** l'on soumet l'amidon à une modification avec le polymère dans un rapport pondéral compris entre 1:0,0005 et 1:2.

4. Procédé selon l'une quelconque des revendications précédentes, **caractérisé en ce que** l'on procède à un séchage de la poudre d'amidon préalablement modifié avec le polymère.

5. Procédé selon l'une quelconque des revendications précédentes, **caractérisé en ce que** l'on réalise, indépendamment l'un de l'autre, la modification et le séchage de l'amidon modifié, à une température comprise entre 10°C et 130°C et à une pression comprise entre 1x10² Pa et 2x10⁵ Pa.

6. Procédé selon l'une quelconque des revendications précédentes, **caractérisé en ce que** l'on hydrolyse l'amidon modifié, à une température élevée et/ou à une pression élevée et/ou sous l'action de forces de cisaillement ainsi qu'en ajoutant éventuellement des additifs.

7. Procédé selon l'une quelconque des revendications précédentes, **caractérisé en ce que** l'on met en oeuvre, pour procéder à la modification, un polymère cationique contenant des groupes ammonium et/ou amino.

8. Les amidons modifiés ,sous forme hydrolysée ou sous forme non hydrolysée, avec un polymère cationique, sous forme de poudre ou de granulés et que l'on peut obtenir au moyen d'un procédé selon l'une des revendications 1 à 7.

9. Mise en oeuvre de l'amidon hydrolysé et modifié avec un polymère selon la revendication 8, lors de la fabrication de papier, carton-pâte et carton, en tant qu'agent de consolidation à sec et qu'agent de consolidation à l'état humide ainsi qu'en tant que déshydratant et qu'agent de rétention.

10. Papier, carton-pâte et carton consolidés par l'ajout de l'amidon hydrolysée et modifié avec un polymère selon la revendication 8.
